# FASCICULE DE BREVET EUROPEEN

(11) **EP 4 585 507 B1**
(45) Date de publication et mention de la délivrance du brevet: **03.06.2026**
(21) Numéro de dépôt: 25150494.0
(22) Date de dépôt: 07.01.2025
(51) Int. Cl.: B64D 37/30, B64C 1/12, B64D 37/00, B64C 1/14

(54) **ENSEMBLE POUR LE RENFORT DU FUSELAGE D'UN AÉRONEF LORS DU RETRAIT D'UN PANNEAU AMOVIBLE**
ANORDNUNG ZUR VERSTÄRKUNG DES RUMPFES EINES LUFTFAHRZEUGS BEI DER ENTFERNUNG EINER ABNEHMBAREN PLATTE
ASSEMBLY FOR REINFORCING THE FUSELAGE OF AN AIRCRAFT DURING THE REMOVAL OF A REMOVABLE PANEL

(30) Priorité: 15.01.2024 FR 2400358
(43) Date de publication de la demande: 16.07.2025
(73) Titulaire: AIRBUS OPERATIONS (S.A.S.), 31060 Toulouse (FR)
(72) Inventeur: MERTES, Antony, 31060 TOULOUSE Cedex 9 (FR); LIEVEN, Patrick, 31060 TOULOUSE Cedex 9 (FR)
(74) Mandataire: Airbus-OPS SAS

(56) Documents cités:
- EP-A1- 4 296 157
- CN-A- 116 654 240
- FR-A1- 3 109 365
- US-A1- 2010 327 113
- US-A1- 2018 222 567

## Description

La présente invention concerne un ensemble pour le renfort du fuselage d'un aéronef dans lequel l'aéronef comporte un fuselage présentant une ouverture et un panneau amovible destiné à être fixé de manière amovible dans l'ouverture du fuselage. Un tel ensemble est mis en œuvre lors du retrait du panneau mobile du fuselage. L'invention concerne également un aéronef sur lequel est monté un tel ensemble ainsi qu'un procédé de retrait du panneau amovible du fuselage.

Actuellement, pour stocker le kérosène, un aéronef comporte des réservoirs qui sont classiquement logés dans les ailes.

Pour limiter la pollution, il est envisagé de changer de carburant et d'utiliser du dihydrogène liquide ou gazeux. Pour stocker le dihydrogène, il est prévu d'utiliser des réservoirs qui sont logés dans le fuselage de l'aéronef.

Pour assurer la maintenance de ces réservoirs, il est nécessaire de pouvoir y accéder facilement pour éventuellement les retirer en cas de besoin, ou au moins périodiquement. Pour ce faire, il est nécessaire de retirer un panneau amovible du fuselage de l'aéronef. Au vu des dimensions des réservoirs, un tel panneau amovible peut présenter une surface supérieure à 20 m².

Il est ainsi nécessaire de prévoir une solution permettant de mettre en place et retirer facilement un panneau amovible permettant l'accès aux réservoirs tout en assurant une continuité structurelle du fuselage et du panneau amovible lorsque le panneau amovible est retiré du fuselage.

Un objet de la présente invention est de proposer un aéronef, tel que revendiqué à la revendication 1. Le document EP 4296157 A1 divulgue, selon son résumé, un aéronef comportant un fuselage présentant une ouverture et comportant des poutres qui sont alignées et qui s'interrompent au niveau des bords de l'ouverture, un panneau amovible où pour chaque paire de poutres alignées du fuselage et s'interrompant au niveau de l'ouverture , une poutre du panneau amovible s'étend entre les deux poutres de la paire, et chaque extrémité de la poutre du panneau amovible est en regard d'une extrémité d'une poutre de la paire, et au niveau de l'extrémité d'au moins une poutre du fuselage en regard avec une extrémité d'une poutre du panneau amovible, des moyens de fixation assurant une fixation amovible entre les extrémités.

Le document FR 3109365 A1 divulgue, selon son résumé, une porte d'aéronef comportant une peau extérieure et une membrure intérieure qui est monobloc et qui comporte d'une seule pièce:
- un cadre périphérique constitué en continu d'un profilé creux qui présente une ouverture longitudinale et qui comporte une patte d'appui interne et une patte d'appui externe, s'étendant suivant une surface épousant la peau extérieure, de part et d'autre de l'ouverture longitudinale, la peau extérieure étant fixée sur les pattes d'appui et refermant l'ouverture longitudinale du cadre périphérique;
- des nervures de renfort disposées dans le cadre périphérique et s'étendant chacune entre deux tronçons du cadre périphérique.

La mise en œuvre dans un aéronef, permet de supporter et renforcer le fuselage et le panneau amovible afin d'éviter que ces derniers ne soient fragilisés, voire déformés, lors du retrait du panneau amovible de l'ouverture. De cette manière, il est également possible de réduire la masse du fuselage de l'aéronef puisqu'il n'est pas nécessaire de mettre en œuvre sur la structure volante, des éléments de renfort au niveau de l'ouverture et du panneau amovible, ce renfort étant obtenu par l'ensemble qui est fixé à l'aéronef uniquement lorsqu'une opération de maintenance au sol est nécessaire.

L'invention concerne également un procédé de retrait d'un panneau amovible d'un fuselage d'un aéronef tel que revendiqué à la revendication 8.

Les caractéristiques de l'invention mentionnées ci-dessus, ainsi que d'autres, apparaîtront plus clairement à la lecture de la description suivante d'un exemple de réalisation et de ces variantes, ladite description étant faite en relation avec les dessins joints, parmi lesquels :
La figure 1 est une vue de côté d'un aéronef selon l'invention,
La figure 2 est une vue en perspective illustrant partiellement un fuselage arrière d'un aéronef ;
La figure 3 est une vue en perspective d'un ensemble selon l'invention ;
La figure 4 est une vue en perspective illustrant partiellement un fuselage arrière d'un aéronef sur lequel est monté le premier support de l'ensemble de la Fig. 3 ;
La figure 5 est une vue en perspective illustrant partiellement un fuselage arrière d'un aéronef sur lequel est monté l'ensemble de la Fig. 3 ;
La figure 6 est une vue en perspective illustrant partiellement un fuselage arrière d'un aéronef après retrait du sous-ensemble de la Fig. 3 ;
La figure 7 est une vue en perspective d'une variante de l'ensemble de la Fig. 3;
La figure 8 est une vue de côté illustrant un exemple de fixation de l'ensemble de l'invention sur le fuselage d'un aéronef ;
La figure 9 est une vue de côté illustrant un autre exemple de fixation de l'ensemble de l'invention sur le fuselage d'un aéronef ;
La figure 10 est une vue en perspective d'un exemple de sous-ensemble d'un ensemble de l'invention ;
La figure 11 est une vue en perspective d'une variante de l'ensemble de la Fig. 3 ; et
La figure 12 est un diagramme illustrant schématiquement les étapes de retrait d'un panneau mobile d'ouverture d'un fuselage en mettant en œuvre un ensemble selon l'invention.

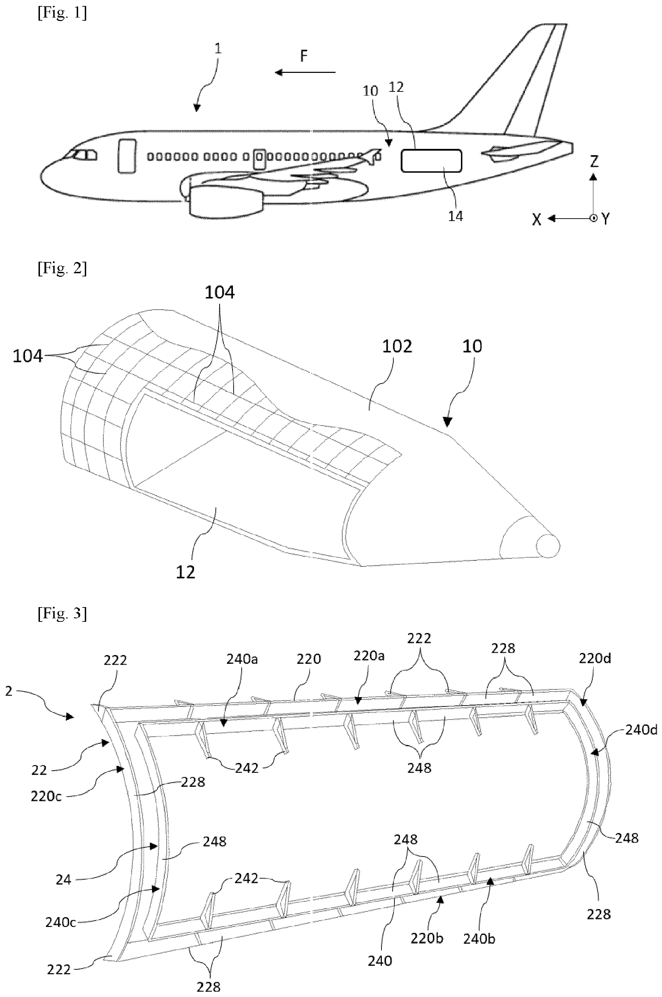

La Fig. 1 montre un aéronef 1 qui comporte un fuselage 10 qui prend globalement une forme cylindrique et un panneau amovible 14 fixé de manière amovible dans une ouverture 12 du fuselage 10. Dans le mode de réalisation de l'invention présenté sur la Fig. 1, il y a un seul panneau amovible 14 mais il est possible d'en avoir plusieurs.

La Fig. 2 montre une vue en perspective d'une partie arrière d'un fuselage 10 de l'aéronef 1. Le fuselage 10 présente une ouverture 12 qui est ici de forme globalement rectangulaire et qui est destinée à recevoir le panneau amovible 14 et à être obturée par le panneau amovible 14 lorsque celui-ci est en place.

Dans la description qui suit, et par convention, on appelle X la direction longitudinale de l'aéronef 1, on appelle Y la direction transversale qui est horizontale lorsque l'aéronef 1 est au sol, et Z la direction verticale qui est verticale lorsque l'aéronef 1 est au sol, ces trois directions X, Y et Z étant orthogonales entre elles.

Dans la description qui suit, les termes relatifs à une position sont pris en référence à un aéronef 1 en position normale de vol, c'est-à-dire comme il est représenté sur la Fig. 1 et les positions « avant » et « arrière » sont prises par rapport à l'avant et l'arrière de l'aéronef 1 par rapport à sa direction d'avancement lorsque ses moteurs fonctionnent. La flèche F représente la direction d'avancement de l'aéronef 1 en vol.

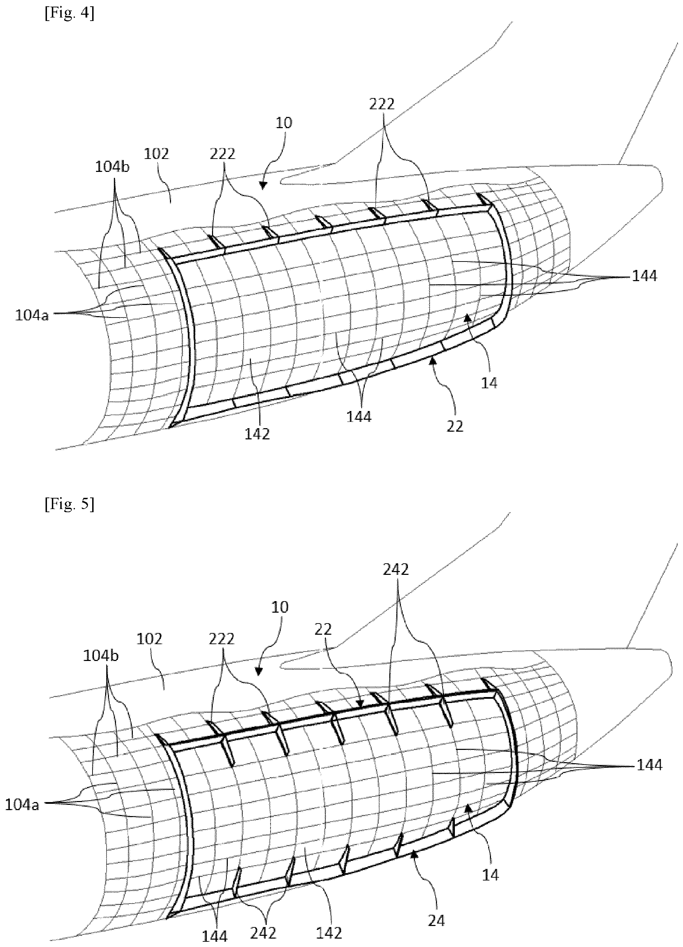

Le fuselage 10 est constitué de panneaux qui sont généralement de forme arquée autour d'un axe longitudinal X. Chaque panneau comporte une peau 102 dont la face intérieure est fixée à des cadres 104a et des lisses 104b. Dans le mode de réalisation de l'invention présenté sur les Figs. 4 à 6 notamment, il y a des cadres 104a qui sont chacun arrangés dans un plan vertical parallèle au plan YZ et des lisses 104b qui s'étendent chacune parallèlement à la direction longitudinale X. Chaque cadre 104a et chaque lisse 104b du fuselage 10 s'interrompt au niveau d'une de ses extrémités au niveau d'un bord de l'ouverture 12.

De préférence, et comme illustré ici, pour chaque cadre 104a qui s'interrompt au niveau d'un bord de l'ouverture 12, un autre cadre 104a est aligné, c'est-à-dire dans le même plan vertical, avec ledit cadre 104a et s'interrompt au niveau du bord opposé de l'ouverture 12. De la même manière, pour chaque lisse 104b qui s'interrompt au niveau d'un bord de l'ouverture 12, une autre lisse 104b est alignée, c'est-à-dire dans le même plan horizontal, avec ladite lisse 104b et s'interrompt au niveau du bord opposé de l'ouverture 12.

Le panneau amovible 14 comporte une peau 142 et des poutres 144 fixées à une face intérieure de la peau 142 du panneau amovible 14. De la même manière que pour le fuselage 10, il y a des poutres 144 qui sont chacune arrangées dans un plan vertical parallèle au plan YZ et des poutres 144 qui s'étendent chacune parallèlement à la direction longitudinale X. Chaque poutre 144 du panneau amovible 14 s'interrompt au niveau d'une de ses extrémités au niveau d'un bord du panneau amovible 14. De préférence, et comme illustré ici, pour chaque poutre 144 qui s'interrompt au niveau d'un bord du panneau amovible 14, un cadre 104a ou une lisse 104b est aligné, c'est-à-dire dans le même plan vertical ou horizontal, avec ladite poutre 144.

En d'autres termes, chaque extrémité d'une poutre 144 du panneau amovible 14 est en regard d'une extrémité d'un cadre 104a ou d'une lisse 104b du fuselage 10. Il y a ainsi une poutre 144 du panneau amovible 14 qui s'étend entre deux cadres 104a ou deux lisses 104b du fuselage 10 et chaque extrémité de la poutre 144 du panneau amovible 14 est en regard d'une extrémité d'un cadre 104a ou d'une lisse 104b du fuselage 10.

Bien que non illustré, on comprend bien évidemment que l'aéronef 1 comporte des moyens de fixation qui assurent une fixation amovible entre l'extrémité des cadres 104a ou des lisses 104b du fuselage 10 et l'extrémité des poutres 144 du panneau amovible 14. La mise en place des moyens de fixation ne s'effectue pas forcément au niveau de l'extrémité de chaque cadre 104a et/ou lisse 104b du fuselage 10, mais au niveau de l'extrémité d'au moins un cadre 104a du fuselage 10, et en fonction de la tenue structurelle, d'autres moyens de fixation sont mis en place sur les extrémités d'autres cadres 104a et/ou lisses 104b du fuselage 10.

La Fig. 3 illustre un mode de réalisation d'un ensemble 2 selon l'invention. Un tel ensemble 2 est destiné à être monté sur le fuselage d'un aéronef 1 afin de renforcer la structure de ce dernier lorsque le panneau amovible 14 est retiré de l'ouverture 12.

Pour ce faire, l'ensemble 2 comporte un premier support 22, comportant une première poutre supérieure 220a, une première poutre inférieure 220b et deux traverses latérales 220c, 220d qui relient les premières poutres supérieure 220a et inférieure 220b. La première poutre supérieure 220a et la première poutre inférieure 220b sont destinées à être fixées à une face extérieure du fuselage 10. Le premier support 22, qui prend la forme d'un encadrement, est destiné à être fixé autour et à l'extérieur de l'ouverture 12.

L'ensemble 2 comporte en outre un sous-ensemble 24 comportant une deuxième poutre supérieure 240a, une deuxième poutre inférieure 240b et au moins deux traverses 240c, 240d reliant les deuxièmes poutres supérieure 240a et inférieure (240b). La deuxième poutre supérieure 240a et la deuxième poutre inférieure 240b sont destinées à être fixées à une face extérieure du panneau amovible 14. Le sous-ensemble 24 est en outre logé à l'intérieur du premier support 22, tout en étant fixé au niveau de l'intérieur de l'ouverture 12 (c'est-à-dire au niveau du panneau amovible).

L'ensemble 2 comporte en outre des premiers moyens de fixation 32 du premier support 22 au fuselage 10 et des deuxièmes moyens de fixation 34 du sous-ensemble 24 au panneau amovible 14.

Plus particulièrement, et comme illustré sur les Figs. 3 à 6, l'ouverture 12 présente ici une forme globalement rectangulaire. Le premier support 22 présente donc ici une forme rectangulaire où la première poutre supérieure 220a est fixée au fuselage 10 à proximité et au-dessus de l'ouverture 12. La première poutre inférieure 220b est quant à elle fixée au fuselage 10 à proximité et en-dessous de l'ouverture 12. Les traverses latérales 220c et 220d relient ici les extrémités des premières poutres supérieure 220a et inférieure 220b. Les traverses latérales 220c et 220d s'étendent à proximité des bords latéraux de l'ouverture 12 et s'étendent sur l'extérieur de l'ouverture 12. Ainsi, l'ouverture 12 est encadrée par le premier support 22 et l'accès à l'ouverture 12 est laissé libre.

Le premier support 22, qui est fixé au fuselage 10 autour de l'ouverture 12, permet de supporter et de renforcer la structure du fuselage 10 afin de la stabiliser. Ainsi, le premier support 22 empêche que le fuselage 10 ne soit fragilisé, voire déformé, lors du retrait du panneau amovible 14. Les efforts longitudinaux (selon l'axe X) subis par le fuselage 10 au niveau de l'ouverture 12 sont absorbés par les premières poutres supérieure 220a et inférieure 220b tandis que les efforts transversaux (selon l'axe Z) sont absorbés par les traverses latérales 220c et 220d.

Il est également envisageable, afin d'encore optimiser la reprise des efforts transversaux, de mettre en œuvre, de manière optionnelle, des chandelles (non illustrées) qui sont en appui au sol et qui sont reliées au premier support 22, par exemple au niveau des traverses latérales 220c et 220d.

En ce qui concerne le sous-ensemble 24, la deuxième poutre supérieure 240a est fixée au panneau amovible 14, à proximité et en-dessous de l'ouverture 12. La deuxième poutre inférieure 240b est quant à elle fixée au panneau amovible 14, à proximité et au-dessus de l'ouverture 12.

Dans cet exemple, le sous-ensemble 24 comporte deux traverses 240c et 240d qui relient les extrémités des deuxièmes poutres supérieure 240a et inférieure 240b pour former un deuxième support logé dans le premier support 22. On pourrait toutefois envisager de mettre en œuvre un nombre supérieur de traverses entre les deuxièmes poutres supérieure 240a et inférieure 240b. Il n'est pas essentiel que les traverses relient les extrémités des deuxièmes poutres supérieure 240a et inférieure 240b.

Le sous-ensemble 24, qui est fixé au panneau amovible 14, permet de supporter et renforcer le panneau amovible 14 afin d'éviter que ce dernier ne soit fragilisé, voire déformé, lors de son retrait de l'ouverture 12. Les efforts longitudinaux (selon l'axe X) subis par le panneau amovible 14 sont absorbés par les deuxièmes poutres supérieure 240a et inférieure 240b tandis que les efforts transversaux (selon l'axe Z) sont absorbés par les traverses 240c et 240d.

De cette manière, le panneau amovible 14 peut être aisément retiré de l'ouverture 12 du fuselage 10, sans risque que le fuselage 10 et/ou le panneau amovible 14 ne se déforme durant les opérations de maintenance.

La mise en œuvre de l'ensemble 2 selon l'invention permet de réduire la masse du fuselage 10 de l'aéronef 1 puisqu'il n'est pas nécessaire de mettre en œuvre sur la structure volante, des éléments de renfort au niveau de l'ouverture 12 et du panneau amovible 14. En effet, le renfort de ces éléments est obtenu par l'ensemble 2 qui est fixé à l'aéronef 1 uniquement lorsqu'une opération de maintenance au sol est nécessaire.

Le premier support 22 et le sous-ensemble 24 peuvent par exemple être fabriqués en acier ou en aluminium.

Comme illustré sur les Figs. 3 à 6 et 8, le premier support 22 comporte des premiers éléments de fixation 222 s'étendant à partir d'une périphérie 220 du premier support 22 et vers l'extérieur du premier support 22. Les premiers moyens de fixation 32 comportent des premiers sabots 322 destinés à être fixés à des cadres 104a ou des lisses 104b du fuselage 10 situées sur une face intérieure de la peau 102 du fuselage 10. Les premiers éléments de fixation 222 sont fixés aux premiers sabots 322.

Plus particulièrement, les premiers éléments de fixation 222, qui se présentent ici globalement sous la forme d'une équerre de fixation, font saillie à partir des premières poutres supérieure 220a et inférieure 220b. Les premiers éléments de fixation 222 s'étendent vers l'extérieur du premier support 22, c'est-à-dire dans une direction opposée à l'ouverture 12, ou dans une direction opposée au sous-ensemble 24. En d'autres termes, les premiers éléments de fixation 222 s'étendant à partir de la première poutre supérieure 220a s'étendent vers le haut tandis que les premiers éléments de fixation 222 s'étendant à partir de la première poutre inférieure 220b s'étendent vers le bas. Cela permet de laisser libre l'accès à l'ouverture 12 de sorte à permettre la fixation du sous-ensemble 24 sur le panneau amovible 14 et permettre le retrait du panneau amovible 14 de l'ouverture 12.

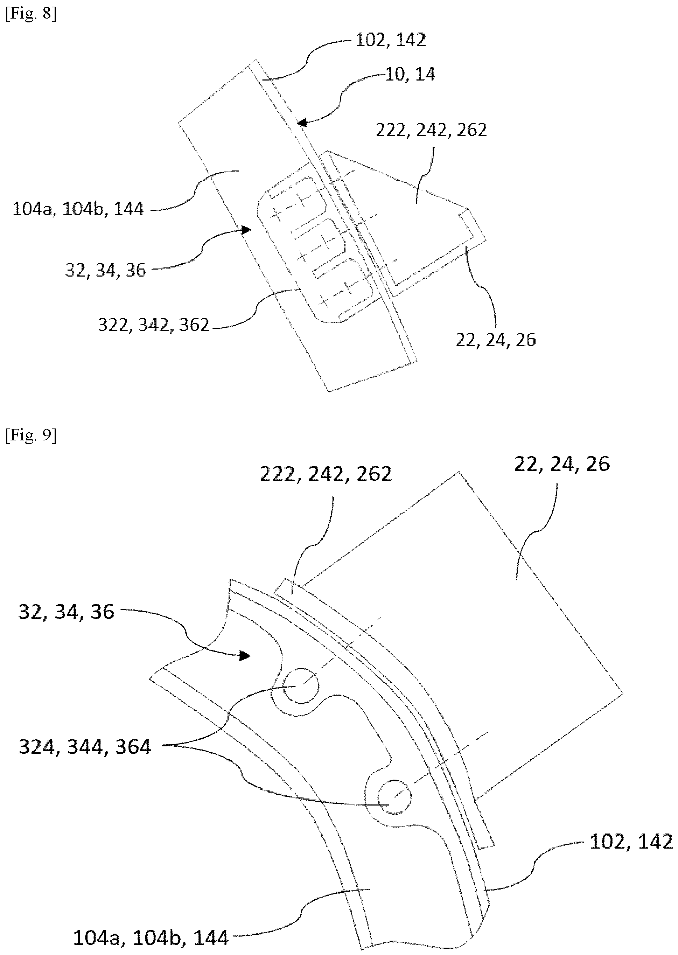

La Fig. 8 montre un premier sabot 322 fixé à un cadre 104a du fuselage 10. Le premier sabot 322 est fixé à l'intérieur du fuselage 10, c'est-à-dire sous la peau 102 du fuselage 10. Le premier sabot 322 peut être fixé de manière amovible au cadre 104a. La fixation du premier sabot 322 au cadre 104a du fuselage 10 s'effectue par exemple classiquement avec de la visserie. On comprend bien évidemment que le premier sabot 322 pourrait être fixé à une lisse 104b du fuselage 10 sans s'écarter du principe de l'invention.

Le premier élément de fixation 222 du premier support 22 est quant à lui en appui sur la face extérieure du fuselage 10, contre la peau 102. Le premier élément de fixation 222 est fixé de manière amovible au premier sabot 322 à travers la peau 102 du fuselage 10, par exemple classiquement avec de la visserie. Une fixation est dite amovible lorsque les deux éléments peuvent être séparés sans destruction ni de l'un ni de l'autre.

De la même manière, les deuxièmes poutres supérieure 240a et inférieure 240b comportent chacune des deuxièmes éléments de fixation 242 qui s'étendent à partir des deuxièmes poutres supérieure 240a et inférieure 240b en direction respectivement de l'autre deuxième poutre 240a, 240b. En d'autres termes, les deuxièmes éléments de fixation 242 qui s'étendent à partir de la deuxième poutre supérieure 240a s'étendent en direction de la deuxième poutre inférieure 240b, tandis que les deuxièmes éléments de fixation 242 qui s'étendent à partir de la deuxième poutre inférieure 240b s'étendent en direction de la deuxième poutre supérieure 240a. Les deuxièmes moyens de fixation 34 comportent des deuxièmes sabots 342 fixés, par exemple de manière amovible, aux poutres 144 du panneau amovible 14 situées sur une face intérieure du panneau amovible 14. Les deuxièmes éléments de fixation 242 sont fixés de manière amovible aux deuxièmes sabots 342.

Dans cet exemple, les deuxièmes éléments de fixation 242 se présentent également sous la forme d'équerres de fixation s'étendant à partir des deuxièmes des deuxièmes poutres supérieure 240a et inférieure 240b et venant en appui contre la peau 142 du panneau amovible 14.

Les détails de structure et de fonctionnement décrits ci-dessus en relation avec la Fig. 8 s'appliquent également aux deuxièmes éléments de fixation 242 et aux deuxièmes sabots 342. Ainsi, le premier support 22 et le sous-ensemble 24 peuvent être fixés au fuselage 10 et au panneau amovible 14 respectivement de manière aisée, rapide et sécurisée.

Dans une variante de réalisation illustrée sur la Fig 9, les premiers moyens de fixation 32 du premier support 22 comportent des écrous barillet destinés à être logés dans des premiers trous de fixation 324 ménagés dans les cadres 104a du fuselage 10 situées sur une face intérieure du fuselage 10. Les premiers éléments de fixation 222 sont fixés auxdits écrous barillet, à travers le fuselage. On comprend bien évidemment que les premiers trous de fixation 324 pourraient aussi être ménagés dans les lisses 104b du fuselage 10 sans s'écarter du principe de l'invention. De même, les deuxièmes moyens de fixation 34 du sous-ensemble 24 comportent des écrous barillet destinés à être logés dans des deuxièmes trous de fixation 344 ménagés dans les poutres 144 du panneau amovible 14 situées sur une face intérieure du panneau amovible 14. Les deuxièmes éléments de fixation 242 sont fixés de manière amovible aux écrous barillet, à travers le fuselage.

Dans ce cas, les cadres 104a ou les poutres 144 comportent des trous de fixation 324, 344 dans lesquels sont logés des écrous barillet. Les trous de fixation 324, 344 sont préalablement prévus sur les cadres 104a, les lisses 104b ou les poutres 144 et peuvent par exemple également constituer des points de fixation pour permettre la connexion avec des équipements de service au sol ou de manutention sur les lignes d'assemblage de l'aéronef. Des vis de fixation (non représentées) sont destinées à traverser successivement les premiers 222 ou deuxièmes 242 éléments de fixation, la peau 102, 142 du fuselage 10 ou du panneau amovible 14, pour ensuite être vissées dans les écrous barillet logés dans les cadres 104a, les lisses 104b ou les poutres 144.

Ainsi, le premier support 22 et le sous-ensemble 24 peuvent être fixés au fuselage 10 et au panneau amovible 14 respectivement de manière aisée, rapide et sécurisée.

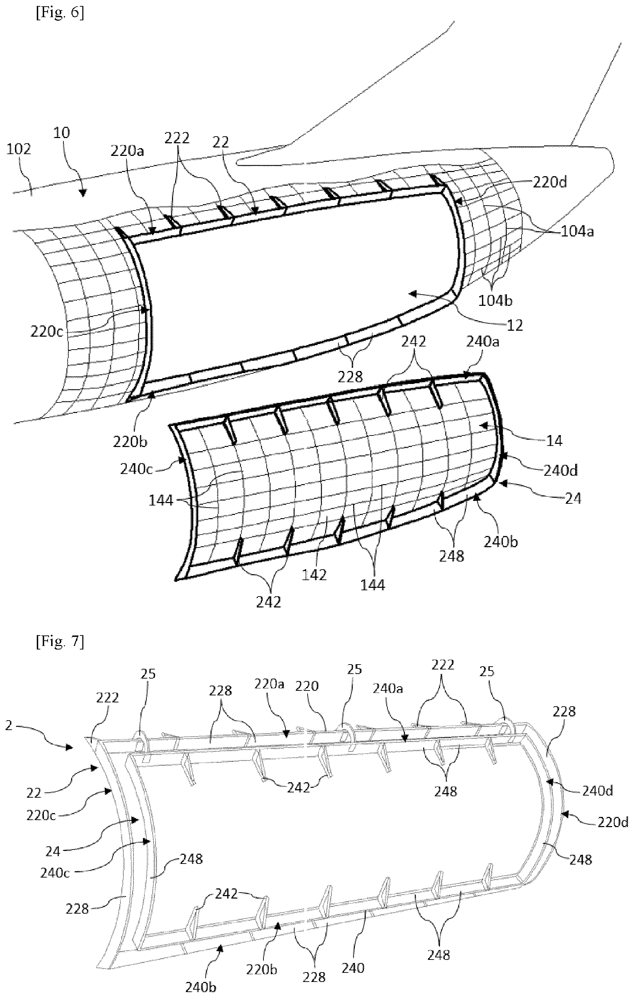

Selon un mode de réalisation illustré sur la Fig. 7, le sous-ensemble 24 est monté mobile en rotation par rapport au premier support 22. Pour ce faire, l'ensemble 2 présente ici plusieurs charnières 25 qui relient le premier support 22 au sous-ensemble 24. Dans cet exemple, trois charnières sont mises en œuvre entre la première poutre supérieure 220a et la deuxième poutre supérieure 240a. Ainsi, le sous-ensemble 24 pivote vers le haut de sorte à libérer l'ouverture 12.

Ainsi, les opérations de manutention du panneau amovible 14 sont optimisées. Par exemple, cela permet de s'affranchir de l'utilisation d'un engin de manutention tel un pont roulant pour retirer le panneau amovible 14 de l'ouverture 12.

Afin de faciliter la rotation du panneau amovible 14, il est envisageable de mettre en œuvre des bras et/ou des vérins (hydrauliques ou pneumatiques) entre le premier support 22 et le sous-ensemble 24 (par exemple au niveau des traverses latérales 220c et 220d).

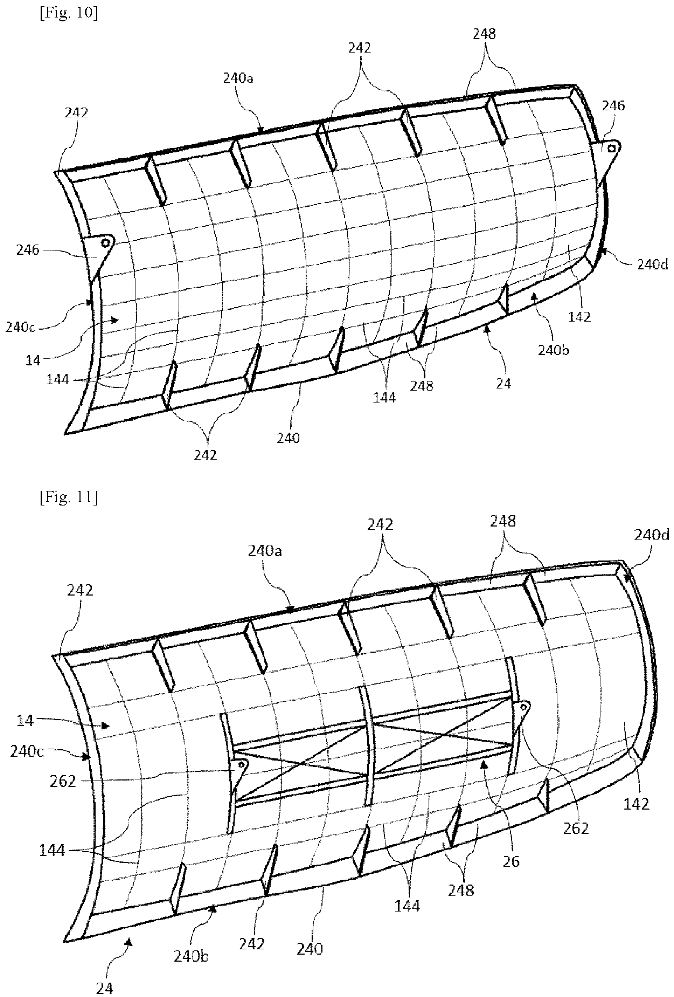

Selon un aspect particulier, illustré sur la Fig. 10, le sous-ensemble 24 comporte des premiers éléments de manutention 246 qui sont ici disposés sur les traverses 240c et 240 d. Ces premiers éléments de manutention 246 pourraient également être disposés sur les deuxièmes poutres supérieure 240a et/ou inférieure 240b. Ces premiers éléments de manutention 246 se présentent ici sous la forme d'oreille comportant un trou destiné à être fixé à un engin de manutention, comme un équipement de service au sol ou un pont roulant par exemple.

Ainsi, les opérations de retrait et de manutention du sous-ensemble 24, et donc du panneau amovible 14, sont simplifiées et sécurisées.

Dans une variante de réalisation illustrée sur la Fig. 11, l'ensemble 2 comporte en outre un support de manutention 26 destiné à être fixé de manière amovible à la face extérieure du panneau amovible 14 par des troisièmes moyens de fixation 36. Le support de manutention 26 comporte au moins un élément de manutention 262 destiné à être fixé à un engin de manutention, comme un équipement de service au sol ou un pont roulant par exemple.

On comprend bien évidemment que le support de manutention 26 peut comporter des troisièmes éléments 262 de fixation du support de manutention 26 au panneau amovible 14. Ces troisièmes éléments de fixation 262 sont fixés aux troisièmes moyens de fixation 36 qui peuvent se présenter sous la forme de troisièmes sabots 362 (comme illustré sur la Fig. 8) ou sous la forme d'écrous barillet logés dans des trous 364 ménagés dans les poutres 144 du panneau amovible 14 (comme illustré sur la Fig. 9).

La mise en œuvre d'un tel support de manutention 26 permet de simplifier et rendre plus sécurisées les opérations de retrait et de manutention du sous-ensemble 24, et donc du panneau amovible 14.

Dans les exemples illustrés sur les Figs. 3 à 11, le premier support 22 est divisé en premiers tronçons 228 qui sont solidarisés entre eux pour former le premier support 22. De préférence, deux premiers tronçons 228 adjacents sont solidarisés entre eux au niveau d'un premier élément de fixation 222.

De la même manière, le sous-ensemble 24 est divisé en deuxièmes tronçons 248 qui sont solidarisés entre eux pour former le sous-ensemble 24. De préférence, deux deuxièmes tronçons 248 adjacents sont solidarisés entre eux au niveau d'un deuxième élément de fixation 242. Ainsi, le premier support 22 et le sous-ensemble 24 peuvent être divisés chacun en une pluralité de tronçons, par exemple jusqu'à 15 kg chacun, de sorte à simplifier leur manutention et leur installation respectivement sur le fuselage 10 et sur le panneau amovible 14.

Les tronçons 228, 248 peuvent être solidarisés ensemble par visserie ou par soudage, par exemple.

Dans une variante, le premier support 22 et/ou le deuxième support 24 est monobloc, c'est-à-dire fabriqué d'une seule pièce, ou du moins non démontable.

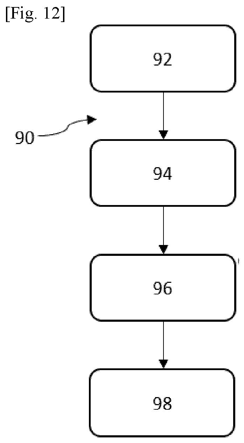

La Fig. 12 illustre schématiquement les étapes du procédé 90 de retrait d'un panneau amovible 14 d'un fuselage 10 d'un aéronef 1 mettant en œuvre un ensemble 2 selon l'invention. Le procédé 90 comporte les étapes de :
- fixation 92, par les premiers moyens de fixation 32, du premier support 22 de l'ensemble 2 à une face extérieure du fuselage 10 autour et à l'extérieur de l'ouverture 12 ;
- fixation 94, par les deuxièmes moyens de fixation 34 de la deuxième poutre supérieure 240a et de la deuxième poutre inférieure 240b du sous-ensemble 24 à une face extérieure du panneau amovible 14, où le sous-ensemble 24 est logé à l'intérieur du premier support 22 ;
- désolidarisation/déverrouillage 96 du panneau amovible 14 par rapport au fuselage 10 ;
- retrait 98, par déplacement du sous-ensemble 24 permettant de retirer le panneau amovible 14 sur lequel il est fixé de l'ouverture 12.

Un tel procédé 90 permet de retirer de manière aisée, rapide et sécurisée un panneau amovible 14 d'une ouverture 12 d'un fuselage 10. En effet, la fixation du premier support 22 sur le fuselage 10, autour de l'ouverture 12, permet de renforcer la structure du fuselage 10 autour de l'ouverture 12 de sorte que le retrait du panneau amovible 14 n'entraîne pas une fragilisation, voire une déformation, du fuselage 10. De plus, la fixation du sous-ensemble 24 sur le panneau mobile 14 permet de renforcer le panneau amovible 14 lors de son retrait du fuselage 10 afin d'empêcher toute fragilisation ou déformation du panneau amovible 14. De plus, lorsque le sous-ensemble 24 comporte des éléments de manutention 246, le retrait du panneau amovible 14 est facilité.

On comprend aisément que pour remettre en place le panneau amovible 14 dans l'ouverture 12, il suffit d'effectuer les étapes décrites précédemment dans le sens inverse, c'est-à-dire de :
- positionner, par déplacement, le sous-ensemble 24 permettant de repositionner le panneau amovible 14 dans l'ouverture 12 ;
- solidariser/verrouiller le panneau amovible 14 par rapport au fuselage 10 ;
- démonter les deuxièmes moyens de fixation 34 pour désolidariser la deuxième poutre supérieure 240a et la deuxième poutre inférieure 240b du sous-ensemble 24 de la face extérieure du panneau amovible 14 ;
- démonter les premiers moyens de fixation 32 pour désolidariser le premier support 22 de la face extérieure du fuselage 10.

## Revendications

1. Aéronef (1) comportant :
- un fuselage (10) comportant une peau (102) ainsi que des cadres (104a) et des lisses (104b) fixés à une face intérieure de la peau (102), ledit fuselage (10) présentant une ouverture (12), où chaque cadre (104a) et chaque lisse (104b) s'interrompt au niveau d'une de ses extrémités au niveau d'un bord de l'ouverture (12) ;
- un panneau amovible (14) destiné à être reçu dans ladite ouverture (12) du fuselage (10), ledit panneau amovible (14) comportant une peau (142) et des poutres (144) fixées à une face intérieure de la peau (142), où chaque poutre (144) s'interrompt au niveau de ses extrémités au niveau d'un bord du panneau amovible (14) ;
- un ensemble (2) comportant :
- un premier support (22) fixé à une face extérieure du fuselage (10), où ledit premier support (22) est fixé autour et à l'extérieur de ladite ouverture (12) ;
- un sous-ensemble (24) comportant une deuxième poutre supérieure (240a), une deuxième poutre inférieure (240b) et au moins deux traverses (240c, 240d) reliant lesdites deuxièmes poutres supérieure (240a) et inférieure (240b), où ladite deuxième poutre supérieure (240a) et ladite deuxième poutre inférieure (240b) sont fixées à une face extérieure dudit panneau amovible (14) et où ledit sous-ensemble (24) est logé à l'intérieur dudit premier support (22) ;
- des premiers moyens de fixation (32) dudit premier support (22) audit fuselage (10) ; et
- des deuxièmes moyens de fixation (34) dudit sous-ensemble (24) audit panneau amovible (14).

2. Aéronef (1) selon la revendication 1, **caractérisé en ce que** ledit premier support (22) comporte des premiers éléments de fixation (222) s'étendant à partir d'une périphérie (220) dudit premier support (22) et vers l'extérieur dudit premier support (22), où lesdits premiers moyens de fixation (32) comportent des premiers sabots (322) destinés à être fixés à des cadres (104a) et/ou des lisses (104b) dudit fuselage (10) situées sur une face intérieure dudit fuselage (10), et où lesdits premiers éléments de fixation (222) sont fixés auxdits premiers sabots (322).

3. Aéronef (1) selon la revendication 1, **caractérisé en ce que** ledit premier support (22) comporte des premiers éléments de fixation (222) s'étendant à partir d'une périphérie (220) dudit premier support (22) et vers l'extérieur dudit premier support (22), où lesdits premiers moyens de fixation (32) comportent des écrous barillet logés dans des premiers trous de fixation (324) ménagés dans des cadres (104a) et/ou des lisses (104b) dudit fuselage (10) situées sur une face intérieure dudit fuselage (10) et où lesdits premiers éléments de fixation (222) sont fixés auxdits écrous barillet.

4. Aéronef (1) selon l'une quelconque des revendications 1 à 3, **caractérisé en ce que** lesdites deuxièmes poutres supérieure (240a) et inférieure (240b) comportent chacune des deuxièmes éléments de fixation (242) s'étendant à partir desdites deuxièmes poutres supérieure (240a) et inférieure (240b) en direction respectivement de l'autre deuxième poutre (240a, 240b), où lesdits deuxièmes moyens de fixation (34) comportent des deuxièmes sabots (342) fixés à des poutres (144) dudit panneau amovible (14) situées sur une face intérieure dudit panneau amovible (14) et où lesdits deuxièmes éléments de fixation (242) sont fixés auxdits deuxièmes sabots (342).

5. Aéronef (1) selon l'une quelconque des revendications 1 à 3, **caractérisé en ce que** lesdites deuxièmes poutres supérieure (240a) et inférieure (240b) comportent chacune des deuxièmes éléments de fixation (242) s'étendant à partir desdites deuxièmes poutres supérieure (240a) et inférieure (240b) en direction respectivement de l'autre deuxième poutre (240a, 240b), où lesdits deuxièmes moyens de fixation (34) comportent des écrous barillet logés dans des deuxièmes trous de fixation (344) ménagés dans les poutres (144) dudit panneau amovible (14) situées sur une face intérieure dudit panneau amovible (14) et où lesdits deuxièmes éléments de fixation (242) sont fixés auxdits écrous barillet.

6. Aéronef (1) selon l'une quelconque des revendications 1 à 5, **caractérisé en ce que** ledit sous-ensemble (24) est monté mobile en rotation par rapport audit premier support (22).

7. Aéronef (1) selon l'une quelconque des revendications 1 à 6, **caractérisé en ce qu'**il comporte en outre un support de manutention (26) destiné à être fixé à ladite face extérieure dudit panneau amovible (14) par des troisièmes moyens de fixation (36), ledit support de manutention (26) comportant au moins un élément de manutention (262) destiné à être fixé à un engin de manutention.

8. Procédé (90) de retrait d'un panneau amovible (14) d'un fuselage (10) d'un aéronef (1) selon l'une des revendications 1 à 7, **caractérisé en ce qu'**il comporte les étapes de :
- fixation (92), par les premiers moyens de fixation (32) du premier support (22) de l'ensemble (2) à la face extérieure du fuselage (10) autour et à l'extérieur de ladite ouverture (12) ;
- fixation (94), par les deuxièmes moyens de fixation (34) de la deuxième poutre supérieure (240a) et de la deuxième poutre inférieure (240b) du sous-ensemble (24) de l'ensemble (2) à la face extérieure dudit panneau amovible (14), où le sous-ensemble (24) est logé à l'intérieur dudit premier support (22) ;
- désolidarisation/déverrouillage (96) du panneau amovible (14) par rapport audit fuselage (10) ;
- retrait (98), par déplacement du sous-ensemble (24).

## Patentansprüche

1. Luftfahrzeug (1), umfassend:
- einen Rumpf (10), umfassend eine Haut (102) sowie Spanten (104a) und Stringer (104b), die an einer Innenseite der Haut (102) befestigt sind, wobei der Rumpf (10) eine Öffnung (12) aufweist, wobei jeder Spant (104a) und jeder Stringer (104b) an einem seiner Enden an einem Rand der Öffnung (12) unterbrochen ist;
- ein abnehmbares Paneel (14), das dazu bestimmt ist, in der Öffnung (12) des Rumpfes (10) aufgenommen zu werden, wobei das abnehmbare Paneel (14) eine Haut (142) und Längsträger (144), die an einer Innenseite der Haut (142) befestigt sind, umfasst, wobei jeder Längsträger (144) an seinen Enden an einem Rand des abnehmbaren Paneels (14) unterbrochen ist;
- eine Baugruppe (2), umfassend:
- eine erste Halterung (22), die an einer Außenseite des Rumpfes (10) befestigt ist, wobei die erste Halterung (22) um die und außerhalb der Öffnung (12) befestigt ist;
- eine Unterbaugruppe (24), umfassend einen zweiten oberen Längsträger (240a), einen zweiten unteren Längsträger (240b) und mindestens zwei Querträger (240c, 240d), die die zweiten oberen (240a) und unteren (240b) Längsträger verbinden, wobei der zweite obere Längsträger (240a) und der zweite untere Längsträger (240b) an einer Außenseite des abnehmbaren Paneels (14) befestigt sind und wobei die Unterbaugruppe (24) im Inneren der ersten Halterung (22) untergebracht ist;
- erste Befestigungsmittel (32) zum Befestigen der ersten Halterung (22) an dem Rumpf (10); und
- zweite Mittel (34) zum Befestigen der Unterbaugruppe (24) an dem abnehmbaren Paneel (14).

2. Luftfahrzeug (1) nach Anspruch 1, **dadurch gekennzeichnet, dass** die erste Halterung (22) erste Befestigungselemente (222) umfasst, die sich von einem Umfang (220) der ersten Halterung (22) aus und nach außerhalb der ersten Halterung (22) erstrecken, wobei die ersten Befestigungsmittel (32) erste Schuhe (322) umfassen, die dazu bestimmt sind, an Spanten (104a) und/oder Stringern (104b) des Rumpfes (10) befestigt zu werden, die auf einer Innenseite des Rumpfes (10) gelegen sind, und wobei die ersten Befestigungselemente (222) an den ersten Schuhen (322) befestigt sind.

3. Luftfahrzeug (1) nach Anspruch 1, **dadurch gekennzeichnet, dass** die erste Halterung (22) erste Befestigungselemente (222) umfasst, die sich von einem Umfang (220) der ersten Halterung (22) aus und nach außerhalb der ersten Halterung (22) erstrecken, wobei die ersten Befestigungsmittel (32) Zylindermuttern umfassen, die in ersten Befestigungslöchern (324) untergebracht sind, die in Spanten (104a) und/oder Stringern (104b) des Rumpfes (10) ausgebildet sind, die auf einer Innenseite des Rumpfes (10) gelegen sind, und wobei die ersten Befestigungselemente (222) an den Zylindermuttern befestigt sind.

4. Luftfahrzeug (1) nach einem der Ansprüche 1 bis 3, **dadurch gekennzeichnet, dass** die zweiten oberen (240a) und unteren Längsträger (240b) jeweils zweite Befestigungselemente (242) umfassen, die sich von den zweiten oberen (240a) und unteren Längsträgern (240b) aus in Richtung des jeweils anderen zweiten Längsträgers (240a, 240b) erstrecken, wobei die zweiten Befestigungsmittel (34) zweite Schuhe (342) umfassen, die an Längsträgern (144) des abnehmbaren Paneels (14) befestigt sind, die auf einer Innenseite des abnehmbaren Paneels (14) gelegen sind, und wobei die zweiten Befestigungselemente (242) an den zweiten Schuhen (342) befestigt sind.

5. Luftfahrzeug (1) nach einem der Ansprüche 1 bis 3, **dadurch gekennzeichnet, dass** die zweiten oberen (240a) und unteren Längsträger (240b) jeweils zweite Befestigungselemente (242) umfassen, die sich von den zweiten oberen (240a) und unteren Längsträgern (240b) aus in Richtung des jeweils anderen zweiten Längsträgers (240a, 240b) erstrecken, wobei die zweiten Befestigungsmittel (34) Zylindermuttern umfassen, die in zweiten Befestigungslöchern (344) untergebracht sind, die in den Längsträgern (144) des abnehmbaren Paneels (14) ausgebildet sind, die auf einer Innenseiten des abnehmbaren Paneels (14) gelegen sind, und wobei die zweiten Befestigungselemente (242) an den Zylindermuttern befestigt sind.

6. Luftfahrzeug (1) nach einem der Ansprüche 1 bis 5, **dadurch gekennzeichnet, dass** die Unterbaugruppe (24) in Bezug auf die erste Halterung (22) drehbeweglich gelagert ist.

7. Luftfahrzeug (1) nach einem der Ansprüche 1 bis 6, **dadurch gekennzeichnet, dass** es ferner eine Handhabungshalterung (26) umfasst, die dazu bestimmt ist, an der Außenseite des abnehmbaren Paneels (14) durch dritte Befestigungsmittel (36) befestigt zu werden, wobei die Handhabungshalterung (26) mindestens ein Handhabungselement (262) umfasst, das dazu bestimmt ist, an einer Handhabungsmaschine befestigt zu werden.

8. Verfahren (90) zum Entfernen eines abnehmbaren Paneels (14) von einem Rumpf (10) eines Luftfahrzeugs (1) nach einem der Ansprüche 1 bis 7, **dadurch gekennzeichnet, dass** es die folgenden Schritte umfasst:
- Befestigen (92) der ersten Halterung (22) der Baugruppe (2) durch die ersten Befestigungsmittel (32) an der Außenseite des Rumpfes (10) um die und außerhalb der Öffnung (12);
- Befestigen (94) des zweiten oberen Längsträgers (240a) und des zweiten unteren Längsträgers (240b) der Unterbaugruppe (24) der Baugruppe (2) durch die zweiten Befestigungsmittel (34) an der Außenseite des abnehmbaren Paneels (14), wobei die Unterbaugruppe (24) im Inneren der ersten Halterung (22) untergebracht ist;
- Trennen/Entriegeln (96) des abnehmbaren Paneels (14) in Bezug auf den Rumpf (10);
- Entfernen (98) durch Verlagern der Unterbaugruppe (24) .

## Claims

1. Aircraft (1) including:
- a fuselage (10) including a skin (102) and formers (104a) and stringers (104b) fixed to an interior face of the skin (102), said fuselage (10) including an opening (12), each former (104a) and each stringer (104b) being interrupted at one of their ends at the level of an edge of the opening (12);
- a removable panel (14) intended to be received in said opening (12) in the fuselage (10), said removable panel (14) including a skin (142) and beams (144) fixed to an interior face of the skin (142), each beam (144) being interrupted at its ends at the level of an edge of the removable panel (14);
- an assembly (2) including:
- a first support (22) fixed to an exterior face of the fuselage (10), said first support (22) being fixed around and outside said opening (12);
- a sub-assembly (24) including a second upper beam (240a), a second lower beam (240b) and at least two crossmembers (240c, 240d) connecting said second upper beam (240a) and lower beam (240b), said second upper beam (240a) and said second lower beam (240b) being fixed to an exterior face of said removable panel (14) and said sub-assembly (24) being housed inside said first support (22);
- first means (32) for fixing said first support (22) to said fuselage (10); and
- second means (34) for fixing said sub-assembly (24) to said removable panel (14).

2. Aircraft (1) according to Claim 1, **characterized in that** said first support (22) includes first fixing elements (222) extending from a periphery (220) of said first support (22) to the outside of said first support (22), said first fixing means (32) including first brackets (322) intended to be fixed to formers (104a) and/or stringers (104b) of said fuselage (10) situated on an interior face of said fuselage (10) and said first fixing elements (222) being fixed to said first brackets (322).

3. Aircraft (1) according to Claim 1, **characterized in that** said first support (22) includes first fixing elements (222) extending from a periphery (220) of said first support (22) and to the exterior of said first support (22), said first fixing means (32) including cross dowel barrels housed in first fixing holes (324) in formers (104a) and/or stringers (104b) of said fuselage (10) situated on an interior face of said fuselage (10) and said first fixing elements (222) being fixed to said cross dowel barrels.

4. Aircraft (1) according to any one of Claims 1 to 3, **characterized in that** said second upper beam (240a) and lower beam (240b) each include second fixing elements (242) extending from said second upper beam (240a) and lower beam (240b) in the direction of the respective other second beam (240a, 240b), said second fixing means (34) including second brackets (342) fixed to beams (144) of said removable panel (14) situated on an interior face of said removable panel (14) and said second fixing elements (242) being fixed to said second brackets (342).

5. Aircraft (1) according to any one of Claims 1 to 3, **characterized in that** said second upper beam (240a) and lower beam (240b) each include second fixing elements (242) extending from said second upper beam (240a) and lower beam (240b) in the direction of the respective other second beam (240a, 240b), said second fixing means (34) including cross dowel barrels housed in second fixing holes (344) in the beams (144) of said removable panel (14) situated on an interior face of said removable panel (14) and said second fixing elements (242) being fixed to said cross dowel barrels.

6. Aircraft (1) according to any one of Claims 1 to 5, **characterized in that** said sub-assembly (24) is mounted to be mobile in rotation relative to said first support (22).

7. Aircraft (1) according to any one of Claims 1 to 6, **characterized in that** it further includes a handling support (26) intended to be fixed to said exterior face of said removable panel (14) by third fixing means (36), said handling support (26) including at least one handling element (262) intended to be fixed to a handling machine.

8. Method (90) of removing a removable panel (14) from a fuselage (10) of an aircraft (1) according to any of Claims 1 to 7, **characterized in that** it includes the steps of:
- (step 92) fixing by means of the first fixing means (32) the first support (22) of the assembly (2) to the exterior face of the fuselage (10) around and outside said opening (12);
- (step 94) fixing by means of the second fixing means (34) the second upper beam (240a) and the second lower beam (240b) of the sub-assembly (24) of the assembly (2) to the exterior face of said removable panel (14), the sub-assembly (24) being housed inside said first support (22);
- (step 96) unfastening/unlocking the removable panel (14) from said fuselage (10);
- (step 98) removing the sub-assembly (24).
